# EUROPÄISCHE PATENTSCHRIFT

(11) **EP 0 372 220 B1**
(45) Veröffentlichungstag und Bekanntmachung des Hinweises auf die Patenterteilung: **10.08.1994**
(21) Anmeldenummer: 89120163.4
(22) Anmeldetag: 31.10.1989
(51) Int. Cl.: H01F 27/06, H02B 7/06

(54) **Transportabler Transformatorenstand für Freilufttransformatoren**
Transportable transformer station for overhead power transformers
Poste de transformation mobile pour transformateurs du type aérien

(30) Priorität: 08.12.1988 DE 3841279
(43) Veröffentlichungstag der Anmeldung: 13.06.1990
(73) Patentinhaber: Betonbau GmbH, D-68753 Waghäusel (DE)
(72) Erfinder: Primus, Illo, Frank, Dr.-Ing., D-7500 Karlsruhe 41 (DE); Baumann, Peter, D-6839 Oberhausen-Rheinhausen (DE)
(74) Vertreter: Hiebsch, Gerhard F., Dipl.-Ing.

(56) Entgegenhaltungen:
- AT-A- 297 836
- DE-A- 2 056 366
- DE-A- 2 209 938
- DE-A- 2 934 505
- US-A- 3 587 908

## Beschreibung

Die Erfindung betrifft einen transportablen Transformatorenstand mit Betonfundament und von diesem aufragenden Betonaußenwänden für Freilufttransformatoren mit Transformatorenkern, bei dem die Abwärme einer Wärmebedarfsstelle zugeordnet ist.

Dazu ist aus der DE-A-2 209 938 eine Transformatorstation mit Unterflurtransformator bekannt, der in einer abgedeckten Grube steht. Der Unterflurtransformator befindet sich in einem mit Öl gefüllten Kessel. Außerdem ist ein separater, einen Ölkreislauf ermöglichender Ölkühler vorhanden, der über Leitungen mit dem Kesselinneren verbunden ist. Dabei ist in den Ölkreislauf eine von einem Elektromotor angetriebene Pumpe geschaltet. Der Ölkühler ist an einer sich außerhalb der Grube befindenden Kühlungsstelle angeordnet. Dabei wird der Ölkühler nach dieser Schrift bevorzugt an einer Wärmebedarfsstelle aufgestellt, und mit der von ihm abzugebenden Wärme werden dann Gehwege oder Straßen, Rasen auf Sportgeländen, Schwimmbecken, Weichen, Kabelverteilerschränke oder auch Räume in Gebäuden oder Warmwassererzeuger beheizt. Als besonderes Ausführungsbeispiel beschreibt diese DE-A-2 209 938 einen in einen Boiler eingebauten Ölkühler (dort Fig. 7). Auch beschreibt diese Schrift einen als Raumheizung dienenden Ölkühler im eingebauten Zustand (dort Fig. 8 und 9) sowie einen als Beckenheizung dienenden Ölkühler (siehe dort Fig. 10 und 11).

Aus der DE-A-2 056 366 ist dabei an sich ein Gehäuse für den Einbau von Transformatoren unter Bodenniveau bekannt. Das Gehäuse wird baukastenförmig in Fertigteilen - Bodenteil, Mantelteil und Deckel - gefertigt und transportiert und erst auf der Baustelle zusammengesetzt. Dieser DE-A-2 056 366 liegt die Aufgabe zugrunde, bei einem unter Bodenniveau untergebrachten Transformator die Abgabe der Verlustwärme direkt an die umgebende Erde zu unterbinden, da erfahrungsgemäß infolge der Wärmeerzeugung des Transformators in weitem Umkreis eine Bodenaustrocknung erfolgt, die die Wärmeabfuhr des Transformators beeinträchtigt und nachteilige Folgen auf die Vegetation hat.

Zur Lösung dieser Aufgabe schlägt die DE-A-2 056 366 vor, den Transformator unter Bodenniveau in einem Gehäuse einzubauen, das aus einem Bodenteil, einem durchbrochenen Deckelteil und einem relativ dickwandigen Wandteil mit eingebauten axialen Luftkanälen besteht, die die Abwärme des Transformators nach oben zur Erdoberfläche führen. Die axialen Luftkanäle im dickwandigen Wandteil des zylindrischen Gehäuses des Transformators sind nierenförmig oder rechteckig am Umfang verteilt. An eine nutzbringende Verwertung der Tansformatorverlustwärme ist dabei nicht gedacht.

Angesichts dieses Standes der Technik hat sich der Erfinder das Ziel gesetzt, die Abwärme von Freilufttransformatoren mit Transformatorenkern nutzbringend zu verwenden und dabei mit einem wesentlich geringeren Planungsaufwand auszukommen.

Diese Aufabe wird erfindungsgemäß durch die Merkmale des Anspruches 1 gelöst.

Besondere Weiterbildungen der Erfindung sind in den Unteransprüchen gekennzeichnet.

Die Erstellung von Transformatorenanlagen aus Fertigteilen mit Komponenten eines Massiv-Absorber Heizsystems senkt den Planungsaufwand für das Heizsystem beträchtlich, da Massiv-Absorber und Massiv-Speicher losgelöst von der speziellen Ausführung des Bauwerkes und wiederholbar ausgeführt werden können.

Im Rahmen der Erfindung erreicht die Anlage einen höheren Wirkungsgrad durch die Wärmestrahlung des Transformators und eine wesentliche Steigerung des Wirkungsgrades durch die direkte Koppelung des eingesetzten Massiv-Absorber-Heizsystems mit dem Transformatorenkern, da die im wesentlichen als Wärme anfallenden Verluste des Transformators dem Massiv-Absorber-Heizsystem unmittelbar zugeführt und damit nahezu restlos nutzbar gemacht werden können.

Von besonderer Bedeutung ist der Gedanke, den gesonderten Wärmekreislauf des Transformatorenkerns in einer Heizebene an den Außenwänden bzw. am Fundament zu führen. Vorteilhafterweise kann die Heizebene der Außenwände zwischen deren Rohrsystemen der Innen- und Außenfläche liegen, die dem Fundament zugeordnete liegt bevorzugt direkt unter diesem.

Dank der Erfindung ist es nunmehr möglich, den Kreis der Bauwerke, die mit derartigen Massiv-Absorber-Heizsystemen ausgerüstet sind, zu erweitern, um die gewonnene Wärmeenergie bei gegebener Anzahl und Art von Bauwerken einem Maximum zuzuführen.

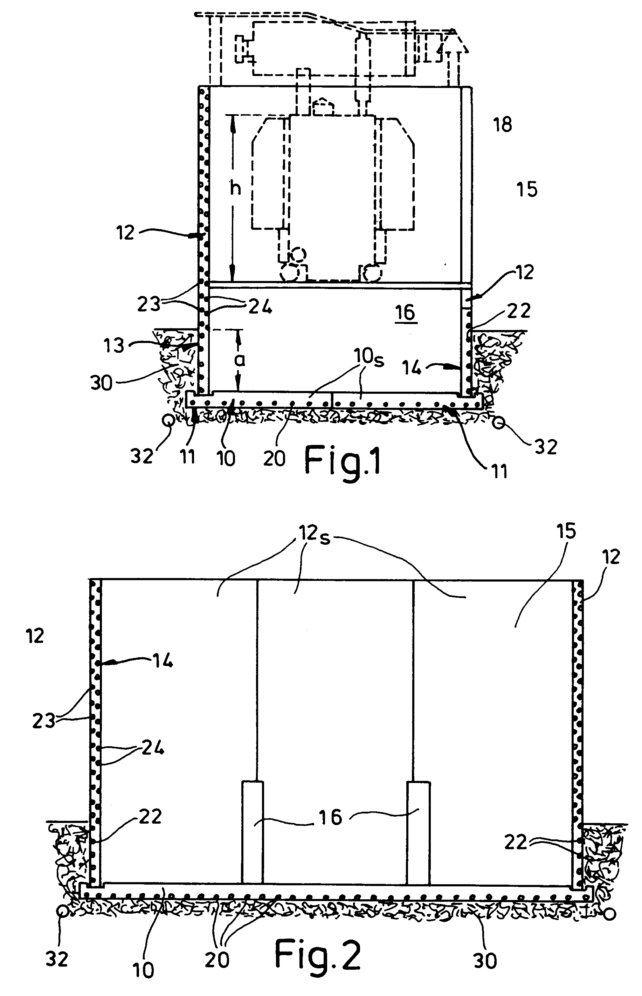

Weitere Vorteile und Einzelheiten der Erfindung ergeben sich aus der nachfolgenden Beschreibung in der Zeichnung dargestellter bevorzugter Ausführungsbeispiele. Die Zeichnung zeigt in
- Fig. 1:: einen Querschnitt eine Transformatorenstandanlage mit Transformator;
- Fig. 2:: einen Längsschnitt durch die Standanlage gemäß Fig. 1 ohne Transformator;

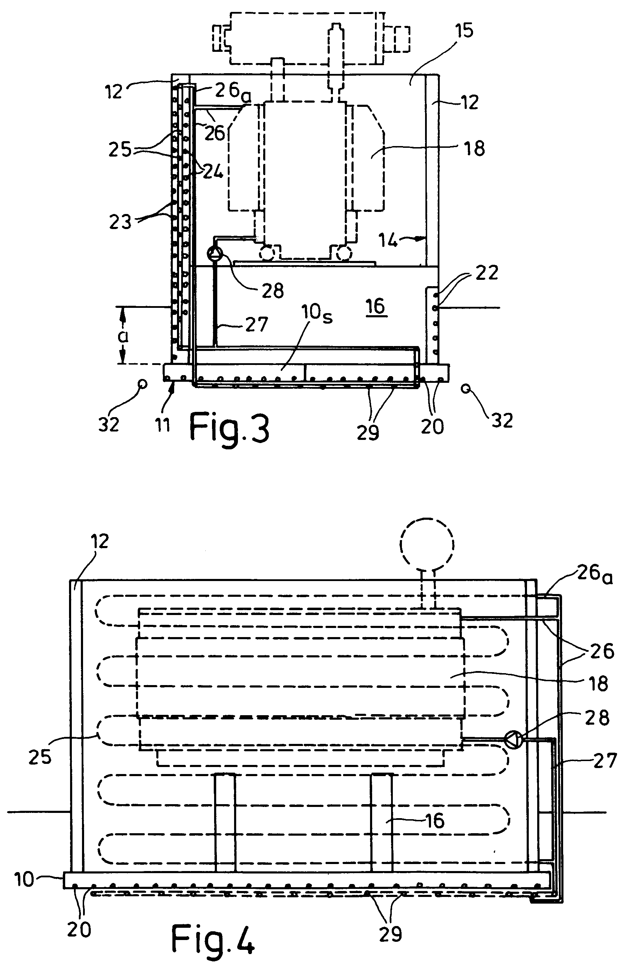

- Fig. 3:: eine der Fig. 1 entsprechende Darstellung der Koppelung eines Transformatorenkerns mit dem Wärmeträger-Flüssigkeitskreislauf eines Massiv-Absorber Heizsystems;
- Fig. 4:: den Längsschnitt zu Fig. 3.

Die in der Zeichnung dargestellte Transformatorenstandanlage wird vor Ort aus Fertigteilen zusammengefügt; auf ein horizontal verlegtes Fundament 10 aus Plattensegmenten 10ₛ werden -- die Außenwände der Standanlage bildende -- Wandsegmente 12ₛ sowie in dem davon begrenzten Innenraum 15 der Standanlage Transformatoren-Betonschienen 6 aufgesetzt.

Die Wandsegmente 12ₛ sind bis zu einer Höhe a in das umgebende Erdreich abgesenkt sowie zum Auffangen der von einem -- auf den Betonschienen 16 stehenden -- Transformator 18 abgestrahlten Wärme an wenigstens drei Seiten der Standlage über die Transformatorhöhe h hochgezogen. Üblicherweise sind zwei Transformatoren 18 nebeneinander für einen bevorzugt wechselweisen Betrieb vorgesehen.

Unmittelbar an der Unterseite 11 der Plattensegmente 10ₛ des Fundaments 10 und dicht an der Außenseite 13 des unterirdischen Bereiches a der Außenwände 12 verlaufen in diesen Rohrsysteme 20 und 22 zur Führung eines flüssigen Wärmeträgers, der dem angrenzenden Erdreich entzogene Wärme zu transportieren vermag. Bei einer Ausführung enthält jedes Fertigteil 10ₛ, 12ₛ ein eigenes Rohrsystem 20 bzw. 22, das jeweils an einen Vor- bzw. einen Rücklauf angeschlossen wird. Bei einer anderen Ausführungsform sind benachbarte Fertigteile 10ₛ bzw. 12ₛ mit einem Abschnitt eines Rohrsystems 20 bzw. 22 ausgestattet, d.h. diese Abschnitte werden erst bei dem Zusammensetzen der entsprechenden Fertigteile 10ₛ bzw. 12ₛ zu einem Rohrsystem 20 bzw. 22 verbunden. Dies gilt entsprechend für den oberirdischen Bereich der Wandsegmente 12ₛ, in welchem letztere nahe ihrer Innenseite 14 mit einem weiteren Rohrsystem 24 -- bzw. einen Abschnitt davon --ausgestattet sind. Das Rohrsystem 24 nimmt zum einen Umgebungswärme auf, zum anderen aber auch Wärme, die von dem/den Transformator/en 18 abgestrahlt wird.

Bei einem anderen Ausführungsbeispiel verläuft zu dem nahe der oberirdischen Außenseite 13 der Außenwände 12 bzw. der Wandsegmente 12ₛ ein Rohrsystem 23, das mit dem nach unten hin angrenzenden Rohrsystem 22 verbunden sein kann. Hierdurch wird der Umgebungsluft an der Außenseite der Transformatorenstandanlage Energie entzogen.

So besitzen sowohl das Fundament 10 als auch die Außenwände 12 wenigstens ein -- gemäß Fig. 4 mäanderartig gelegtes -- Rohrsystem 20 bzw. 22, 23, 24, das einerseits über Vorläufe mit einer Sohle als Wärmeträgerflüssigkeit gespeist und anderseits an Rücklaufe angeschlossen ist. Diese Vor- und Rückläufe sind in einem aus Gründen der Übersichtlichkeit nicht dargestellten Verteilerschacht zusammengefaßt.

Im Abstand von ca. 20 bis 40 cm von den Fundamentplattensegmenten 10 und den Wandsegmenten 12 ist eine verdichtete Frostschutz-Kiespackung 30 angebracht, damit sich bildendes Kondensat im Erdreich versickern kann und Eisbildung verhindert wird. Diesem Zweck dient auch eine rund um die Transformatorenstandanlage angeordnete Drainage 32, die ein wesentlicher Bestandteil der Ausbildung der Transformatorenstandanlage zum Massiv-Absorber-Heizsystem ist.

Die Strahlungswärme des Transformators 18 heizt -- wie bereits beschrieben -- die Wärmeträgerflüssigkeit im Rohrsystem 24 der oberirdischen Wandsegmente 12ₛ.

Zusätzlich wird die Verlustwärme des Transformators 18 durch Wärmeableitung zur Aufheizung der Wärmeträgerflüssigkeit benutzt. Hierzu führt gemäß Fig. 3 vom Kern des flüssigkeitsgekühlten Transformators 18 eine dieser Wärmeableitung dienende Zirkulationsleitung 26 für die Kühlflüssigkeit -- mit Rücklauf 27 und Pumpe 28 -- zu einem unter dem Fundament 10 verlaufenden Rohrsystem 29, ein Abzweig 26ₐ davon zu einem Durchlaufrohrsystem 25 in den Wandsegmenten 12ₛ. Die von diesen Rohrsystemen 29, 25 abzugebende Wärme gelangt erkennbar zusätzlich an die Rohrsysteme 20, 22 bis 24. Darin gesammelte und gespeicherte Wärmeenergie kann unter Verwendung einer Wärmepumpe zum Heizen von Gebäuden -- beispielsweise von Aufenthaltsräumen eines Umspannwerkes, von dem die Transformatorenanlage ein Teil ist -- eingesetzt werden.

## Patentansprüche

1. Transportabler Transformatorenstand mit Betonfundament (10) und von diesem aufragenden Betonaußenwänden (12) für Freilufttransformatoren (18) mit Transformatorenkern, bei dem die Abwärme einer Wärmebedarfsstelle zugeordnet ist,
dadurch gekennzeichnet,
daß das Betonfundament (10) und die Betonaußenwände (12) Fertigteile bzw. aus Fertigteilen (10s,12s) zusammengesetzt sind, in die zumindest ein Rohrsystem (20 bzw. 22 bis 25) in an sich bekannter Weise einbetoniert ist, daß durch mit einbetonierte Verbindungselemente für das Rohrsystem (20 bzw. 22 bis 25) wenigstens ein geschlossener Wärmeträgerflüssigkeitskreislauf ausgebildet ist, der mit dem Transformatorenkern wärmeleitend verbunden ist und daß die Außenwände (12) aus transportablen Wandungssegmenten (12s) zusammengesetzt sind, von denen jedes Wandungssegment (12s) mindestens einen geschlossenen Wärmeträgerflüssigkeitskreislauf (22 bis 25) oder einen Teil davon enthält.

2. Transformatorenstand nach Anspruch 1, dadurch gekennzeichnet, daß das plattenartige flüssigkeitsdurchströmte Fundament (10) Einrichtungen aufweist, an die Betonstreifenfundamente und die Außenwände (12) anschließbar sind.

3. Transformatorenstand nach einem der vorhergehenden Ansprüche, dadurch gekennzeichnet, daß die Außenwände (12) beidseitig mit Rohrsystemen (22 bis 24) belegt sind, wobei die innenseitige Rohrbelegung oberhalb der Höhe des Gefällebetons in Abstand zur Fundamentplatte (10) einbetoniert ist.

4. Transformatorenstand nach einem der vorhergehenden Ansprüche, dadurch gekennzeichnet, daß der Transformatorenkern mit dem Wärmeträgerflüssigkeitskreislauf über wenigstens ein weiteres Rohrsystem (25,29) wärmeleitend in Verbindung steht, das unmittelbar an die Fertigteile der Fundamentsegmente (10s) bzw. Wandsegmente (12s) herangeführt bzw. teilweise in diese einbetoniert ist, wobei an den Wärmeträgerflüssigkeitskreislauf bei flüssigkeitsgekühltem Transformator (18) die Transformatoren-Kühlflüssigkeit zirkulierbar angeschlossen ist.

5. Transformatorenstand nach Anspruch 4, dadurch gekennzeichnet, daß ein Teilrohrsystem (29) des als Wärmetauscher ausgebildeten weiteren Rohrsystems unter der Betonfundamentplatte (10) geführt ist.

6. Transformatorenstand nach Anspruch 4 oder 5, dadurch gekennzeichnet, daß ein Teil des als Wärmetauscher ausgebildeten weiteren Rohrsystems (20) durch die Betonfundamentplatte (10) geführt ist.

7. Transformatorenstand nach einem der vorhergehenden Ansprüche, dadurch gekennzeichnet, daß zumindest ein Teil der Anschlüsse der Wärmeträgerflüssigkeitskreisläufe (20,29;22 bis 25) unterirdisch im Bereich der Fundamentplatte (10) angeordnet sind.

8. Transformatorenstand nach einem der Ansprüche 1 bis 7, dadurch gekennzeichnet, daß die Anschlüsse der Wärmeträgerflüssigkeitskreisläufe (20,29;22 bis 25) einem gemeinsamen, vorgefertigen Verteilerschacht zugeführt sind.

9. Transformatorenstand nach einem der Ansprüche 1 bis 8, dadurch gekennzeichnet, daß in Abstand von den Fundamentsegmentplatten (10) und den Wandsegmenten (12) eine verdichtete Frostschutz-Kiespackung (30) sowie um die Fundamentsegmentplatten eine Drainage (32) angebracht sind.

10. Transformatorenstand nach einem der vorhergehenden Ansprüche, dadurch gekennzeichnet, daß vom Kern des flüssigkeitsgekühlten Transformators (18) eine der Wärmeableitung dienende Zirkulationsleitung (26) für die Kühlflüssigkeit zu einem unter dem Fundament (10) verlaufenden Rohrsystem (29) führt.

11. Transformatorenstand nach Anspruch 10, dadurch gekennzeichnet, daß ein Abzweig (26a) der Zirkulationsleitung (26) zu einem Durchlaufrohrsystem (25) in den Wandsegmenten (12s) führt.

12. Transformatorenstand nach einem der vorhergehenden Ansprüche, dadurch gekennzeichnet, daß der Wärmeträgerflüssigkeitskreislauf zum Anschluß an eine Wärmepumpe ausgebildet ist.

## Claims

1. Transportable transformer station comprising a concrete foundation (10) and concrete external walls (12) rising up from the latter for overhead power transformers (18) with a transformer core, in which the waste heat is associated with a heat requirement point, characterised in that the concrete foundation (10) and the concrete external walls (12) are prefabricated components or are assembled from prefabricated components (10s, 12s) in which at least one conduit system (20 or 22 to 25) is embedded in the manner known per se, that connecting elements for the conduit system (20 or 22 to 25) also embedded form at least one closed heat transfer fluid circuit which is connected in a heat-conducting manner to the transformer core and that the external walls (12) are assembled from transportable wall segments (12s), each wall segment (12s) containing at least one closed heat transfer fluid circuit (22 to 25) or a part thereof.

2. Transformer station according to claim 1, characterised in that the plate-like foundation (10) traversed by fluid has means to which concrete strip foundations and the external walls (12) can be connected.

3. Transformer station according to one of the preceding claims, characterised in that the external walls (12) are covered on both sides by conduit systems (22 to 24), the inner conduit arrangement being embedded above the height of the sloping concrete at a distance from the foundation plate (10).

4. Transformer station according to one of the preceding claims, characterised in that the transformer core is connected in a heat-conducting manner to the heat transfer fluid circuit via at least one further conduit system (25, 29) which leads directly to the prefabricated components of the foundation segments (10s) or wall segments (12s) or is partially embedded in the latter, wherein the transformer coolant can be circulated around the heat transfer fluid circuit in the case of a liquid-cooled transformer (18).

5. Transformer station according to claim 4, characterised in that a partial conduit system (29) of the further conduit system designed as a heat exchanger is conducted under the concrete foundation plate (10).

6. Transformer station according to claim 4 or claim 5, characterised in that part of the further conduit system (20) designed as a heat exchanger is conducted through the concrete foundation plate (10).

7. Transformer station according to one of the preceding claims, characterised in that at least some of the connections for the heat transfer fluid circuits (20, 29; 22 to 25) are arranged underground in the region of the foundation plate (10).

8. Transformer station according to one of claims 1 to 7, characterised in that the connections for the heat transfer fluid circuits (20, 29; 22 to 25) are led to a common prefabricated distributor duct.

9. Transformer station according to one of claims 1 to 8, characterised in that a compacted frost blanket gravel packing (30) is provided at a distance from the segmental foundation plates (10) and the wall segments (12) and drainage (32) is provided around the segmental foundation plates.

10. Transformer station according to one of the preceding claims, characterised in that a circulation line (26) for the coolant serving for heat dissipation leads from the core of the liquid-cooled transformer (18) to a conduit system (29) extending under the foundation (10).

11. Transformer station according to claim 10, characterised in that a branch (26a) of the circulation line (26) leads to a continuous-flow conduit system (25) in the wall segments (12s).

12. Transformer station according to one of the preceding claims, characterised in that the heat transfer fluid circuit is designed to be connected to a heat pump.

## Revendications

1. Poste de transformation transportable comportant une fondation en béton (10) et, se dressant sur celle-ci, deux murs extérieurs en béton (12), pour transformateurs extérieurs (18) avec un noyau de transformateur, où la chaleur perdue est affectée à une station de besoins en chaleur, caractérisé en ce que la fondation en béton (10) et les murs extérieurs en béton (12) sont des éléments préfabriqués ou sont composés d'éléments préfabriqués (10s, 12s) dans lesquels est bétonnée d'une façon en soi connue au moins une conduite (20, resp. 22 à 25), qu'au moyen de raccords pour la conduite (20, ou 22 à 25) bétonnés de la même façon, est formée au moins un circuit de fluide caloporteur fermé qui est relié au noyau du transformateur en étant conducteur de chaleur, et que les murs extérieurs (12) sont composés de segments de parois transportables (12s) dont chaque segment de paroi (12s) comporte au moins un circuit de fluide caloporteur fermé (22 à 25) ou une partie de celui-ci.

2. Poste de transformation selon la revendication 1, caractérisé en ce que la fondation (10), sous forme de plaques par laquelle passe le fluide, présente des dispositifs auxquels peuvent être raccordés des semelles de fondation en béton et les murs extérieurs (12).

3. Poste de transformation selon l'une des revendications précédentes, caractérisé en ce que les murs extérieurs (12) sont recouverts des deux côtés de conduites (22 à 24), la conduite posée sur le côté intérieur étant bétonnée au-dessus du niveau incliné du béton à distance de la semelle de fondation (10).

4. Poste de transformation selon l'une des revendications précédentes, caractérisé en ce que le noyau du transformateur est en liaison de manière à conduire la chaleur, avec le circuit de fluide caloporteur par au moins une autre conduite (25, 29), qui est amenée à proximité immédiate des éléments préfabriqués des segments de fondation (10s) ou segments de paroi (12s) ou est bétonnée partiellement dans ceux-ci, le liquide de refroidissement du transformateur étant relié en permettant sa circulation au circuit de fluide caloporteur lorsque le transformateur (18) est refroidi par liquide.

5. Poste de transformation selon la revendication 4, caractérisé en ce qu'un tronçon de conduite (29) de l'autre conduite se présentant sous forme d'échangeur de chaleur, passe endessous de la semelle de fondation en béton (10).

6. Poste de transformation selon l'une des revendications 4 ou 5, caractérisé en ce qu'un tronçon de l'autre conduite (20) se présentant sous forme d'échangeur de chaleur , passe à travers la semelle de fondation en béton (10).

7. Poste de transformation selon l'une des revendications précédentes, caractérisé en ce qu'au moins une partie des raccords des circuits de fluide caloporteur (20, 29; 22 à 25) est enterrée au niveau de la semelle de fondation (10).

8. Poste de transformation selon l'une quelconque des revendications 1 à 7, caractérisé en ce que les raccords des circuits de fluide caloporteur (20, 29; 22 à 25) sont amenés vers un puits de distribution commun préfabriqué.

9. Poste de transformation selon lune quelconque des revendications 1 à 8, caractérisé en ce qu'à distance des plaques de segment de fondation (10) et des segments de paroi (12) est disposé un gravier antigel comprimé (30) et, autour des plaques de segment de fondation, un système de drainage (32).

10. Poste de transformation selon l'une quelconque des revendications précédentes, caractérisé en ce qu'une conduite de circulation (26) pour le liquide, permettant la dissipation de la chaleur, passe du noyau du transformateur (18) refroidi par liquide vers une conduite (29) s'étendant sous la fondation (10).

11. Poste de transformation selon la revendication 10, caractérisé en ce qu'une dérivation (26a) de la conduite de circulation (26) conduit à une tuyauterie (25) au passage continu dans les segments de paroi (12s).

12. Poste de transformation selon l'une des revendications précédentes, caractérisé en ce que le circuit de fluide caloporteur est monté de façon à pouvoir être raccordé à une pompe de chaleur.
